# EUROPEAN PATENT APPLICATION

(11) **EP 4 442 759 A1**
(43) Date of publication of application: **09.10.2024**
(21) Application number: 22901229.9
(22) Date of filing: 28.11.2022
(51) Int. Cl.: C08L 67/00, C08K 3/04

(54) **LIQUID-CRYSTAL POLYESTER COMPOSITION AND MOLDED OBJECT THEREOF**

(30) Priority: 03.12.2021 JP 2021197070
(71) Applicant: Sumitomo Chemical Company, Limited, Tokyo 103-6020 (JP)
(72) Inventor: TAKAGI, Wataru, Tsukuba-shi, Ibaraki 300-3294 (JP); HEGI, Hiromitsu, Katsuragi-shi, Nara 639-2123 (JP)
(74) Representative: Vossius & Partner Patentanwälte Rechtsanwälte mbB
(86) International application number: PCT/JP2022/043740
(87) International publication number: WO 2023/100796

(57) **Abstract**

The present invention relates to a liquid crystal polyester composition comprising a liquid crystal polyester and a specific carbon black, wherein primary particles of the carbon black have an average particle diameter of 50 nm or more and less than 70 nm, and the carbon black has a BET specific surface area of less than 40 m²/g.

## Description

### Technical Field

The present invention relates to a liquid crystal polyester composition and a molded object thereof.

The present application claims priority based on Japanese Patent Application No. 2021-197070 filed in Japan on December 3, 2021, the content of which is incorporated herein by reference in its entirety.

### Background Art

A liquid crystal polyester is known for its high chemical stability, heat resistance, flowability, and dimensional accuracy, and is used in various fields such as electrical, electronic, machinery, optical equipment, automotive, aircraft, and medical fields. For example, a liquid crystal polyester is widely used as a molding material for connector components and the like due to its good flowability and high heat resistance to surface mounting.

In addition, a liquid crystal polyester is often used under high temperature conditions because of its good heat resistance. Therefore, a black-colored grade of a liquid crystal polyester has also been studied in order to prevent discoloration or add design quality.

For example, Patent Literature 1 discloses a liquid crystal polyester composition comprising a liquid crystal polyester and a carbon black. In the Patent Literature 1, a composition in which a carbon black has a BET specific surface area of 200 m²/g or more is used from the standpoint of preventing electrostatic charge from the molded object.

### Citation List

### Patent Literature

Patent Literature 1: Japanese Patent Laid-Open No. 2006-45298

### Summary of Invention

### Problems to be Solved by Invention

Furthermore, a liquid crystal polyester is a material having the characteristics of both a low relative permittivity and a low dielectric dissipation factor among polymers.

By the way, in recent years, the use of high-frequency signals has been studied in order to cope with the increase in transmitted information and higher speeds. High-frequency compatible components require electronic components of high performance and high reliability that can be readily adaptable to the high-frequency range, which attaches importance to the dielectric properties of the materials in the transmission components used therein. And molding materials that can provide a relative permittivity and a dielectric dissipation factor low enough to satisfy such requirements are in demand.

However, with the black-colored liquid crystal polyester composition disclosed in the Patent Literature 1 above, the effect of keeping the increment of the relative permittivity and the increment of the dielectric dissipation factor at low level is inadequate to satisfy such requirements.

The present invention has been made in view of such circumstances, and the object of the present invention is to provide a liquid crystal polyester composition that is colored black and has both a lower increment of the relative permittivity and a lower increment of the dielectric dissipation factor than the state in which it is not colored black, and a molded object thereof.

### Means to Solve the Problems

In order to solve the problems above, the present invention includes the following aspects.
<1> A liquid crystal polyester composition comprising a liquid crystal polyester and a carbon black, wherein primary particles of the carbon black have an average particle diameter of 50 nm or more and less than 70 nm, and the carbon black has a BET specific surface area of less than 40 m²/g.
<2> The liquid crystal polyester composition according to <1>, wherein the carbon black has a DBP oil absorption of 80 mL/100 g or more and 120 mL/100 g or less.
<3> The liquid crystal polyester composition according to <1> or <2>, wherein primary particles of the carbon black have an average particle diameter of 55 nm or more and less than 70 nm.
<4> The liquid crystal polyester composition according to any one of <1> to <3>, wherein a content of the carbon black is 0.015 parts by mass or more and 15 parts by mass or less based on 100 parts by mass of a content of the liquid crystal polyester.
<5> The liquid crystal polyester composition according to any one of <1> to <4> further comprising a filler, wherein a content of the filler is 1 part by mass or more and 200 parts by mass or less based on 100 parts by mass of the content of the liquid crystal polyester.
<6> The liquid crystal polyester composition according to <5>, wherein the filler is at least one inorganic filler selected from the group consisting of a fibrous filler, a hollow filler, and a plate filler.
<7> A molded object comprising the liquid crystal polyester composition according to any one of <1> to <6>.

### Effects of Invention

According to the present invention, it is possible to provide a liquid crystal polyester composition that is colored black and has both a lower increment of the relative permittivity and a lower increment of the dielectric dissipation factor than the state in which it is not colored black, and a molded object thereof.

### Embodiments for Carrying out Invention

### (Liquid crystal polyester composition)

One embodiment of a liquid crystal polyester composition comprises a liquid crystal polyester and a carbon black. The liquid crystal polyester composition of the embodiment is colored black, and both the increment of the relative permittivity and the increment of the dielectric dissipation factor are lower than in a state in which it is not colored black. The term "a state in which it is not colored black" refers to the state of the composition in which the carbon black is excluded from the liquid crystal polyester composition of the embodiment. The liquid crystal polyester composition of the embodiment is, among others, suitable as molding materials for electronic components and is particularly suitable as molding materials for high-speed transmission connectors, high-speed transmission antennas, and the like.

### <Liquid crystal polyester>

The liquid crystal polyester comprised in the liquid crystal polyester composition of the embodiment is not particularly limited if it is a polyester that exhibits liquid crystal properties in a melt state. The liquid crystal polyester that melts at temperatures of 450°C or less is preferable. The liquid crystal polyester of the embodiment may be liquid crystal polyester amide, liquid crystal polyester ether, liquid crystal polyester carbonate, liquid crystal polyester imide, and the like.

The flow starting temperature of the liquid crystal polyester in the embodiment is preferably 250°C or more, more preferably 270°C or more, and further more preferably 280°C or more.

In addition, the flow starting temperature of the liquid crystal polyester of the embodiment is preferably 400°C or less, more preferably 360°C or less, and further more preferably 340°C.

For example, the flow starting temperature of the liquid crystal polyester in the embodiment is preferably 250°C or more and 400°C or less, more preferably 270°C or more and 360°C or less, and further more preferably 280°C or more and 340°C or less.

In the present description, the flow starting temperature is also called the flow temperature or the fluidity temperature and is a guide of the molecular weight of a liquid crystal polyester (see Naoyuki Koide (ed.), "Liquid Crystal Polymers - Synthesis, Molding, Applications", CMC Publishing Co., Ltd., June 5, 1987, P. 95) .

As a specific method of measuring the flow starting temperature, a capillary rheometer is used, and when a liquid crystal polyester is melted and extruded from a nozzle having an inner diameter of 1 mm and a length of 10 mm at a temperature increase rate of 4°C/min under a load of 9.8 MPa (100 kg/cm²), the temperature exhibiting the viscosity of 4800 Pa·s is determined as the flow starting temperature.

It is preferable that the liquid crystal polyester in the embodiment is a wholly aromatic liquid crystal polyester obtained using only aromatic compounds as the raw material monomers.

It is preferable that the liquid crystal polyester is a wholly aromatic liquid crystal polyester having only repeating units derived from aromatic compounds.

In the present description, "derived" means that the chemical structure of a functional group that contributes to polymerization is changed for polymerization of a raw material monomer, and no other structural changes occur. The concept of being derived here includes the case of being derived from a polymerizable derivative of the raw monomer.

Typical examples of the liquid crystal polyester in the embodiment include a polymer obtained by polymerizing (polycondensation of) an aromatic hydroxycarboxylic acid, an aromatic dicarboxylic acid and at least one kind of compound selected from the group consisting of an aromatic diol, an aromatic hydroxyamine and an aromatic diamine; a polymer obtained by polymerizing a plurality of aromatic hydroxycarboxylic acids; a polymer obtained by polymerizing an aromatic dicarboxylic acid and at least one kind of compound selected from the group consisting of an aromatic diol, an aromatic hydroxyamine, and an aromatic diamine; and a polymer obtained by polymerizing a polyester such as a polyethylene terephthalate and an aromatic hydroxycarboxylic acid.

Here, the aromatic hydroxycarboxylic acid, the aromatic dicarboxylic acid, the aromatic diol, the aromatic hydroxyamine, and the aromatic diamine may each independently be replaced in whole or in part with a polymerizable derivative thereof.

Examples of a polymerizable derivative of a compound having a carboxyl group such as an aromatic hydroxycarboxylic acid and an aromatic dicarboxylic acid include an ester in which the carboxyl group is converted to an alkoxycarbonyl group or an aryloxycarbonyl group; an acid halide in which the carboxyl group is converted to a haloformyl group; an acid anhydride in which the carboxyl group is converted to acyloxycarbonyl group.

Examples of a polymerizable derivative of a compound having a hydroxyl group such as an aromatic hydroxycarboxylic acid, an aromatic diol, and an aromatic hydroxyamine include an acylated compound obtained by acylating the hydroxyl group to convert the same into an acyloxyl group.

Examples of a polymerizable derivative of a compound having an amino group such as an aromatic hydroxyamine and an aromatic diamine include an acylated compound obtained by acylating the amino group to convert the same into an acylamino group.

In the present description, the number of repeating units (degree of polymerization of repeating units) means the value obtained by the analytical method disclosed in Japanese Patent Laid-Open No. 2000-19168.

Specifically, a liquid crystal polyester is reacted with a lower alcohol (alcohol having 1 to 3 carbon atoms) in a supercritical state, and the liquid crystal polyester is depolymerized to a monomer that induces the repeating unit, and the monomer that induces each repeating unit, obtained as the depolymerized product, is quantified by liquid chromatography to calculate the number of each repeating unit.

The liquid crystal polyester in the embodiment is preferably a liquid crystal polyester having a repeating unit represented by the following formula (1) (hereinafter referred to as "repeating unit (1)"), and is more preferably a liquid crystal polyester having the repeating unit (1), a repeating unit represented by the following formula (2) (hereinafter referred to as "repeating unit (2)") and a repeating unit represented by the following formula (3) (hereinafter referred to as "repeating unit (3)").

(1) -O-Ar¹-CO-

(2) -CO-Ar²-CO-

(3) -X-Ar³-Y-

wherein Ar¹ represents a phenylene group, a naphthylene group, or a biphenylylene group; Ar² and Ar³ each independently represent a phenylene group, a naphthylene group, biphenylylene group, or a group represented by the following formula (4); X and Y each independently represent an oxygen atom or an imino group (-NH-); and the hydrogen atoms in the groups represented by Ar¹, Ar² or Ar³ each independently may be replaced with a halogen atom, an alkyl group or an aryl group.

(4) -Ar⁴-Z-Ar⁵-

wherein Ar⁴ and Ar⁵ each independently represent a phenylene group or a naphthylene group; and Z represents an oxygen atom, a sulfur atom, a carbonyl group, a sulfonyl group or an alkylidene group.

Examples of a halogen atom with which one or more hydrogen atoms in the group represented by Ar¹, Ar² or Ar³ can be replaced include a fluorine atom, a chlorine atom, a bromine atom, and an iodine atom.

Examples of an alkyl group with which one or more hydrogen atoms in the group represented by Ar¹, Ar² or Ar³ can be replaced include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group, and an n-decyl group, and the number of carbon atoms thereof is preferably 1 to 10.

Examples of an aryl group with which one or more hydrogen atoms in the group represented by Ar¹, Ar² or Ar³ can be replaced include a phenyl group, an o-tolyl group, an m-tolyl group, a p-tolyl group, a 1-naphthyl group or a 2-naphthyl group, and the number of carbon atoms thereof is preferably 6 to 20. The aryl group may be a monocyclic group or a condensed ring group. Like a tolyl group, the aryl group may also be a group in which the hydrogen atom in the aromatic ring is replaced with an alkyl group.

When the hydrogen atoms in the groups represented by Ar¹, Ar² or Ar³ are replaced with the groups described above, the number of groups replacing the hydrogen atoms is preferably one or two, more preferably one.

Examples of the alkylidene group in Z in the formula (4) include a methylene group, an ethylidene group, an isopropylidene group, an n-butylidene group, a 2-ethylhexylidene group, and the number of carbon atoms thereof is preferably 1 to 10.

The repeating unit (1) is a repeating unit derived from an aromatic hydroxycarboxylic acid. Examples of the repeating unit (1) include a repeating unit in which Ar¹ is a 1,4-phenylene group (a repeating unit derived from p-hydroxybenzoic acid), and a repeating unit in which Ar¹ is a 2,6-naphthylene group (a repeating unit derived from 6-hydroxy-2-naphthoic acid).

The repeating unit (2) is a repeating unit derived from an aromatic dicarboxylic acid. Examples of the repeating unit (2) include a repeating unit in which Ar² is a 1,4-phenylene group (a repeating unit derived from terephthalic acid), a repeating unit in which Ar² is a 1,3-phenylene group (a repeating unit derived from isophthalic acid), a repeating unit in which Ar² is a 2,6-naphthylene group (a repeating unit derived from 2,6-naphthalene dicarboxylic acid),and a repeating unit in which Ar² is a diphenyl ether-4,4'-diyl group (a repeating unit derived from diphenyl ether-4,4'-dicarboxylic acid).

The repeating unit (3) is a repeating unit derived from an aromatic diol, an aromatic hydroxylamine or an aromatic diamine. Examples of the repeating unit (3) includes a repeating unit in which Ar³ is a 1,4-phenylene group (a repeating unit derived from hydroquinone, p-aminophenol or p-phenylenediamine), and a repeating unit in which Ar³ is a 4,4'-biphenylylene group (a repeating unit derived from 4,4'-dihydroxybiphenyl, 4-amino-4'-hydroxybiphenyl or 4,4'-diaminobiphenyl).

The number of repeating units (1) based on the total number of all repeating units (100%) is preferably 30% or more and 80% or less, more preferably 40% or more and 70% or less, and further more preferably 50% or more and 70% or less.

The number of repeating units (2) based on the total number of all repeating units (100%) is preferably 35% or less, more preferably 10% or more and 35% or less, and further more preferably 150 or more and 30% or less.

The number of repeating units (3) based on the total number of all repeating units (100%) is preferably 35% or less, more preferably 10% or more and 35% or less, and further more preferably 150 or more and 30% or less.

The ratio of the number of repeating units (2) to the number of repeating units (3), expressed as [number of repeating units (2)]/ [number of repeating units (3)], is preferably 0.9/1 to 1/0.9, more preferably 0.95/1 to 1/0.95, and further more preferably 0.98/1 to 1/0.98.

The liquid crystal polyester in the embodiment may have two or more repeating units each from the repeating units (1) to (3). The liquid crystal polyester may also have repeating units other than the repeating units (1) to (3), but the number of such units is preferably 10% or less, and more preferably 5% or less of the total number of all repeating units (100%).

It is preferable that the liquid crystal polyester in the embodiment has, as the repeating unit (1), a repeating unit in which Ar¹ is a 1,4-phenylene group (a repeating unit derived from p-hydroxybenzoic acid).

It is preferable that the liquid crystal polyester in the embodiment has, as the repeating unit (2), a repeating unit in which Ar² is a 1,4-phenylene group (a repeating unit derived from terephthalic acid) and a repeating unit in which Ar² is a 1,3-phenylene group (a repeating unit derived from isophthalic acid) respectively, and it is more preferable to have both of these repeating units.

It is preferable that the liquid crystal polyester in the embodiment has, as the repeating unit (3), a repeating unit in which X and Y are an oxygen atom respectively, i.e., a repeating unit derived from a specified aromatic diol, and it is more preferable that it has, as the repeating unit (3), only a repeating unit in which X and Y are an oxygen atom respectively.

It is preferable that the liquid crystal polyester in the embodiment is a liquid crystal polyester having a repeating unit (1), a repeating unit (2) and a repeating unit (3), and it is particularly preferable that it is a liquid crystal polyester having a repeating unit derived from p-hydroxybenzoic acid, a repeating unit derived from terephthalic acid, a repeating unit derived from isophthalic acid and a repeating unit derived from aromatic diol.

In the embodiment, one kind of liquid crystal polyester may be used alone, or two or more kinds may be used in combination.

The content of the liquid crystal polyester in the liquid crystal polyester composition of the embodiment is preferably 40% or more by mass, more preferably 45% or more by mass, and further more preferably 50% or more by mass, based on 100% by mass of the total composition.

In addition, the content of the liquid crystal polyester in the liquid crystal polyester composition of the embodiment is preferably 80% or less by mass, more preferably 75% or less by mass, and further more preferably 70% or less by mass, based on 100% by mass of the total composition.

For example, the content of liquid crystal polyester in the liquid crystal polyester composition of the embodiment is preferably 40% or more and 80% or less by mass, more preferably 45% or more and 75% or less by mass, and further more preferably 50% or more and 70% or less by mass, based on 100% by mass of the total composition.

### [Method of producing liquid crystal polyester]

The liquid crystal polyester can be produced by melt-polymerization of raw monomers corresponding to the constituting structural units. For example, it can be produced according to the method disclosed in Japanese Patent No. 6439027.

### <Carbon black>

The carbon black comprised in the liquid crystal polyester composition of the embodiment is characterized in that primary particles of the carbon black have an average particle diameter of 50 nm or more and less than 70 nm, and the carbon black has a BET specific surface area of less than 40 m²/g.

The black coloring of the liquid crystal polyester composition of the embodiment is achieved by the liquid crystal polyester composition comprising the carbon black.

### [Particle diameter of carbon black]

The particle diameter of the carbon black of the embodiment means the diameter of primary particles, which is the average diameter calculated by measuring a small spherical component (component having a contour of microcrystal and inseparable) that constitute carbon black aggregate using an electron microscope. The diameter of primary particles can be determined by the method described in Carbon Black Yearbook No. 48 (1998), p. 114, published by the Carbon Black Association.

More specifically, it can be calculated by observing carbon black at a magnification of 20000 times with a transmission electron microscope, measuring the diameter of 1000 primary particles of any given carbon black, and determining the number average thereof.

The primary particles of the carbon black of the embodiment have an average particle diameter of 50 nm or more and less than 70 nm, preferably 55 nm or more and less than 70 nm, and more preferably 60 nm or more and less than 70 nm.

If primary particles of the carbon black have an average particle diameter less than the upper limit of the range above, it is easier to keep the relative permittivity of the molded object at a low level and to obtain a molded object with high degree of blackness. In contrast, if primary particles of the carbon black have an average particle diameter at the lower limit or more of the range above, it is easier to keep the dielectric dissipation factor of the molded object at a low level.

### [BET specific surface area of carbon black]

The BET specific surface area of carbon black of the embodiment refers to a nitrogen adsorption specific surface area. The measurement of the nitrogen adsorption specific surface area is performed by removing gases and the like adhering to the surface of the sample in advance, adsorbing nitrogen on the sample at a liquid nitrogen temperature, and calculating the specific surface area from the adsorbed amount.

More specifically, in accordance with JIS K6217-2:2001, nitrogen gas is adsorbed under a liquid nitrogen temperature using a measuring instrument of the BET specific surface area (e.g., AccuSorb 2100E by Micromeritics Instrument Corporation), the adsorbed amount is measured, and the value calculated by the BET method (Brunauer-Emmett-Teller method) is selected.

The BET specific surface area of the carbon black of the embodiment is less than 40 m²/g, preferably 35 m²/g or less, and more preferably 30 m²/g or less. If the BET specific surface area of the carbon black is less than the upper limit of the range above, it is easier to keep the dielectric dissipation factor of the molded object at a low level.

The lower limit of the BET specific surface area of the carbon black of the embodiment may be, for example, 10 m²/g or more, 15 m²/g or more, or 20 m²/g or more. If the BET specific surface area of the carbon black is the lower limit or more of the range above, the amount of the carbon black used can be reduced.

For example, the BET specific surface area of the carbon black of the embodiment is less than 40 m²/g, preferably 10 m²/g or more and less than 40 m²/g, more preferably 15 m²/g or more and less than 35 m²/g, and further more preferably 20 m²/g or more and less than 30 m²/g.

### [Absorption of oil or dibutyl phthalate (DBP) of carbon black]

The DBP oil absorption of the carbon black in the embodiment can be determined using a dibutyl phthalate absorbed meter in accordance with the method described in JIS K6217-4:2001.

The DBP oil absorption of the carbon black in the embodiment is preferably 80 mL/100 g or more and 120 mL/100 g or less, more preferably 80 mL/100 g or more and 110 mL/100 g or less, further more preferably 80 mL/100 g or more and 100 mL/100 g or less, and particularly preferably more than 80 mL/100 g and 90 mL/100 g or less.

If the DBP oil absorption of the carbon black is the lower limit or more of the preferable range above, it is easier to keep the dielectric dissipation factor of the molded object at a low level. In contrast, if it is the upper limit or less of the preferable range, it is easier to keep the relative permittivity of the molded object at a low level.

Examples of the carbon black in the embodiment include, for example, furnace black, lamp black, channel black, thermal black, ketjen black, and naphthalene black.

In the liquid crystal polyester composition of the embodiment, one kind of carbon black may be used alone, or two or more kinds may be used in combination.

As the carbon black in the embodiment, furnace black is preferable among the above.

The content of the carbon black in the liquid crystal polyester composition of the embodiment is preferably 0.01% or more by mass and 10% or less by mass, preferably 0.02% or more by mass and 8% or less by mass, more preferably 0.4% or more by mass and 5% or less by mass, further more preferably 0.6% or more by mass and 2% or less by mass, even further more preferably 0.6% or more by mass and 1.4% or less by mass, and particularly preferably 0.8% or more by mass and 1.2% or less by mass, based on 100% by mass of the total composition.

The content of the carbon black in the liquid crystal polyester composition of the embodiment, based on 100 parts by mass of the content of the liquid crystal polyester, is preferably 0.015 parts by mass or more and 15 parts by mass or less, preferably 0.03 parts by mass or more and 12 parts by mass or less, more preferably 0.5 parts by mass or more and 8 parts by mass or less, further more preferably 0.8 parts by mass or more and 6 parts by mass or less, even further more preferably 1 part by mass or more and 4 parts by mass or less, and particularly preferably 1 part by mass or more and 2.5 parts by mass or less.

The content of the carbon black in the liquid crystal polyester composition of the embodiment, based on the total 100 parts by mass of the composition excluding the carbon black, is preferably 0.01 parts by mass or more and 10 parts by mass or less, preferably 0.02 parts by mass or more and 8 parts by mass or less, more preferably 0.4 parts by mass or more and 5 parts by mass or less, further more preferably 0.6 parts by mass or more and 2 parts by mass or less, even further more preferably 0.6 parts by mass or more and 1.4 parts by mass or less, and particularly preferably 0.8 parts by mass or more and 1.2 parts by mass or less.

If the content of the carbon black in the liquid crystal polyester composition is the lower limit or more of the preferable range above, it is easier to obtain an intended blackness and a liquid crystal polyester composition in which both the increment of the relative permittivity and the increment of the dielectric dissipation factor are kept at low level. In contrast, if it is the upper limit or less of the preferable range above, it is easier to maintain the insulation properties of the molded object and the flowability of the composition.

In the present description, the "composition excluding the carbon black" means the composition excluding the carbon black from the liquid crystal polyester composition of the embodiment. In the case of a liquid crystal polyester composition in Example 1 described below, a composition comprising a liquid crystal polyester (1), a liquid crystal polyester (2), a glass fiber (1), a plate inorganic filler (1), and a mold release agent (1) is referred to. That is, in the case of the liquid crystal polyester composition of Example 1 described below, the "composition excluding the carbon black" refers to a composition excluding CB (1) from the composition described in Example 1.

### <Optional component>

The liquid crystal polyester composition of the embodiment may comprise, if necessary, other components (optional components) in addition to the liquid crystal polyester and the carbon black described above.

Examples of the optional component include a filler, a resin other than the liquid crystal polyester, a conductivity-imparting agent other than the carbon black, a mold release agent, a flame retardant, a crystal nucleating agent, an ultraviolet absorber, an antioxidant, a vibration-damping agent, an antibacterial agent, an insect repellent, an odor repellent, an anti-coloring agent, a heat stabilizer, an antistatic agent, a plasticizer, a lubricant, a dye, a foaming agent, an antifoaming agent, a viscosity modifier, and a surfactant.

### «Mold release agent»

It is favorable that the liquid crystal polyester composition of the embodiment further comprises a mold release agent in addition to the liquid crystal polyester and the carbon black described above. By comprising a mold release agent as the optional component above, the liquid crystal polyester composition of the embodiment can improve the molding processability. Examples of the mold release agent include, for example, a montanoic acid and salts, an ester and a half ester thereof, as well as a stearyl alcohol, stearamide, and a polyethylene wax, and preferable is a fatty acid ester of pentaerythritol.

The content of the mold release agent in the liquid crystal polyester composition of the embodiment is preferably 0.1 parts by mass or more and 0.7 parts by mass or less, and more preferably 0.15 parts by mass or more and 0.4 parts by mass or less based on 100 parts by mass of the liquid crystal polyester. If the content of the mold release agent is within the range above, mold contamination and blistering of molded articles are less likely to occur, and an excellent mold release effect is likely to be obtained.

### <<Filler>>

In addition to the liquid crystal polyester and the carbon black described above, it is preferable that the liquid crystal polyester composition of the embodiment further comprises a filler. By further comprising a filler, the mechanical strength and heat resistance of the molded object can be enhanced.

The filler may be an inorganic filler or an organic filler, and may be selected according to the application, required properties, and the like.

### · Inorganic filler

As an inorganic filler, for example, one kind of or more kinds of a fibrous filler, a hollow filler, a plate filler, or a granular filler can be used.

Examples of the fibrous filler in the inorganic filler include a glass fiber; a carbon fiber such as a PAN-based carbon fiber and a pitch-based carbon fiber; a ceramic fiber such as a silica fiber, an alumina fiber, a silica-alumina fiber; a metal fiber such as a stainless-steel fiber; a whisker such as a potassium titanate whisker, a barium titanate whisker, a wollastonite whisker, an aluminum borate whisker, a silicon nitride whisker, and a silicon carbide whisker. Among these, the glass fiber, the ceramic fiber, and the whisker are preferable, and the glass fiber, the silica fiber, the alumina fiber, the silica-alumina fiber and the wollastonite whisker are particularly preferable.

The number average fiber length of the fibrous filler may be, as an example, 30 µm or more and 5000 µm or less, 50 µm or more and 3500 µm or less, and 70 µm or more and 2000 µm or less, from the standpoint of the mechanical strength added to a molded object and flowability of the composition.

The fiber diameter (diameter of single fiber) of the fibrous filler may be, as an example, 5 µm or more and 20 µm or less, 6 µm or more and 17 µm or less, and 7 µm or more and 15 µm or less, from the standpoint of the mechanical strength added to a molded object and flowability of the composition.

For the hollow filler, a filler with a cavity inside the particle, commonly called a balloon, is used. Examples of the hollow filler include, for example, a filler made of an inorganic material such as an alumina, a silica, and a glass; and a filler made of an organic material such as a urea resin and a phenolic resin. Among these, the hollow filler made of an inorganic material is preferable. Specific examples include a glass balloon, a silica balloon, and an alumina balloon, and among these, the glass balloon is preferable.

The median diameter (D₅₀) of the hollow filler is preferably 1 µm or more and 50 µm or less, more preferably 5 µm or more and 40 µm or less, and further more preferably 10 µm or more and 30 µm or less. The median diameter (D₅₀) means the value measured by dispersing the hollow filler in water and using a laser diffraction/scattering particle size distribution analyzer.

Examples of the plate filler in the inorganic filler include talc, mica, graphite, a glass flake, barium sulfate, and calcium carbonate. The mica may be muscovite, phlogopite, fluorophlogopite, or tetrasilisic mica.

The volume average particle diameter of the talc is preferably 10 µm or more and 20 µm or less, more preferably 12 µm or more and 18 µm or less, and further more preferably 14 µm or more and 18 µm or less.

The volume average particle diameter of the talc can be measured by the laser diffraction/scattering method. Using a laser diffraction/scattering particle size distribution analyzer (e.g., LA-950V2 by HORIBA, Ltd.) as the measurement device, the volume average particle diameter can be calculated under the following measurement conditions while the talc is dispersed in water.

### (Measurement conditions)

Particle refractive index: 1.57 - 0.1i
Dispersing medium: water
Dispersing medium refractive index: 1.33

Examples of the granular filler in the inorganic filler include silica, alumina, titanium oxide, glass beads, boron nitride, silicon carbide, and calcium carbonate.

### · Organic fillers

As the organic filler, one kind of or more kinds of a fibrous filler, a plate filler, or a granular filler can be used, for example.

Examples of the fibrous filler in the organic filler include a polyester fiber, an aramid fiber, and a cellulose fiber.

Examples of the granular filler in the organic filler include a filler made of an insoluble and infusible polymer such as a homopolymer of p-hydroxybenzoic acid.

In the liquid crystal polyester composition of the embodiment, one kind of a filler may be used alone, or two or more kindss may be used in combination.

As the filler, from the standpoint of the mechanical strength added, the inorganic filler is suitably used, at least one kind of inorganic filler selected from the group consisting of the fibrous filler, the hollow filler and the plate filler is more suitably used, at least one kind of inorganic filler selected from the group consisting of the fibrous filler and the plate filler is further more suitably used, and the combination of the fibrous inorganic filler and the plate inorganic filler is particularly suitably used.

In the combination of the fibrous inorganic filler and the plate inorganic filler, the mixing ratio of the fibrous inorganic filler and the plate inorganic filler, in the mass ratio represented by "plate inorganic filler/fibrous inorganic filler," is preferably 1 or more and 10 or less, more preferably more than 1 and 10 or less, further more preferably more than 1 and 7 or less, and particularly preferably more than 1 and 5 or less.

When the liquid crystal polyester composition of the embodiment further comprises a filler, the content of the filler in the liquid crystal polyester composition is preferably 1% or more by mass, more preferably 10% or more by mass, and further more preferably 20% or more by mass, based on 100% by mass of the total composition.

In addition, the content of the filler in the liquid crystal polyester composition of the embodiment is preferably 70% or less by mass, more preferably 60% or less by mass, and further more preferably 50% or less by mass, based on 100% by mass of the total composition.

For example, the content of the filler in the liquid crystal polyester composition of the embodiment is preferably 1% or more by mass and 70% or less by mass, more preferably 10% or more by mass and 60% or less by mass, and further more preferably 20% or more by mass or 50% or less by mass, based on 100% by mass of the total composition.

When the liquid crystal polyester composition of the embodiment further comprises a filler, the content of the filler in the liquid crystal polyester composition is preferably 1 part by mass or more, more preferably 10 parts by mass or more, and further more preferably 25 parts by mass or more, based on 100 parts by mass of the content of the liquid crystal polyester.

In addition, the content of the filler in the liquid crystal polyester composition of the embodiment is preferably 200 parts by mass or less, more preferably 150 parts by mass or less, and further more preferably 100 parts by mass or less, based on 100 parts by mass of the content of the liquid crystal polyester.

For example, the content of the filler in the liquid crystal polyester composition of the embodiment is preferably 1 part by mass or more and 200 parts by mass or less, more preferably 10 parts by mass or more and 150 parts by mass or less, and further more preferably 25 parts by mass or more and 100 parts by mass or less, based on 100 parts by mass of the content of the liquid crystal polyester.

If the filler content in the liquid crystal polyester composition is the lower limit or more of the favorable range above, it is easier to enhance the mechanical strength and heat resistance of the molded object. In contrast, if the filler content in the liquid crystal polyester composition is the upper limit or less of the preferable range above, it is easier to maintain flowability of the composition.

### <<Resin other than liquid crystal polyester>>

Examples of the resin other than the liquid crystal polyester include a polyolefin resin such as polyethylene, polypropylene, polybutadiene, and polymethylpentene; a vinyl resin such as vinyl chloride, vinylidene chloride, vinyl acetate, and polyvinyl alcohol; a polystyrene resin such as polystyrene, an acrylonitrile-styrene resin (AS resin), and an acrylonitrile-butadiene-styrene resin (ABS resin); a polyamide resin such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymetaxylene adipamide (nylon MXD6), polynonamethylene terephthalamide (nylon 9T), and polydecamethylene terephthalamide (nylon 10T); a polyester resin such as polyethylene terephthalate, polyethylene naphthalate, polybutylene terephthalate, and polytrimethylene terephthalate; a polysulfone resin such as modified polysulfone, polyethersulfone, polysulfone, and polyphenylsulfone; a polyphenylene sulfide resin such as linear polyphenylene sulfide, cross-linked polyphenylene sulfide, and semi-cross-linked polyphenylene sulfide; a polyetherketone resin such as polyetherketone, polyether ether ketone, and polyether ketone ketone; a polyimide resin such as thermoplastic polyimide, polyamideimide, and polyetherimide; polycarbonate; polyphenylene ether; and a fluororesin.

The liquid crystal polyester composition of the embodiment described above comprises a liquid crystal polyester and a carbon black whose average particle diameter of primary particles is 50 nm or more and less than 70 nm and whose BET specific surface area is less than 40 m²/g. Because such a specific carbon black is selected, according to the liquid crystal polyester composition of the embodiment, the molded object prepared is colored black, and both the increment of the relative permittivity and the increment of the dielectric dissipation factor are lower than in a state in which it is not colored black.

The liquid crystal polyester composition of the embodiment has the following aspects.

<8> A liquid crystal polyester composition according to any one of <1> to <6> above, the liquid crystal polyester having a repeating unit (1) represented by the following formula (1), a repeating unit (2) represented by the following formula (2), and a repeating unit (3) represented by the following formula (3).

(1) -O-Ar¹-CO-

(2) -CO-Ar²-CO-

(3) -X-Ar³-Y-

wherein Ar¹ represents a phenylene group, a naphthylene group, or a biphenylylene group; Ar² and Ar³ each independently represent a phenylene group, a naphthylene group, biphenylylene group, or a group represented by the following formula (4); X and Y each independently represent an oxygen atom or an imino group (-NH-); and the hydrogen atoms in the groups represented by Ar¹, Ar² or Ar³ each independently may be replaced with a halogen atom, an alkyl group or an aryl group.

(4) -Ar⁴-Z-Ar⁵-

wherein Ar⁴ and Ar⁵ each independently represent a phenylene group or a naphthylene group; and Z represents an oxygen atom, a sulfur atom, a carbonyl group, a sulfonyl group or an alkylidene group.

<9> The liquid crystal polyester composition according to <8> wherein the liquid crystal polyester has a repeating unit derived from p-hydroxybenzoic acid, a repeating unit derived from terephthalic acid, a repeating unit derived from isophthalic acid, and a repeating unit derived from an aromatic diol.

<10> With a value of the relative permittivity and a value of the dielectric dissipation factor at 1 GHz calculated under the measurement conditions below as the average values of 10 test pieces of 64 mm x 64 mm x 1.0 mm t obtained by feeding the liquid crystal polyester composition according to <1> to <6>, <8> or <9> into an injection molding machine and injection molding it under the conditions of: cylinder temperature 350°C, mold temperature 130°C and injection speed 75 mm/sec, and
with a value of the relative permittivity and a value of the dielectric dissipation factor at 1 GHz calculated under the measurement conditions below as the average values of 10 test pieces of 64 mm x 64 mm x 1.0 mm t obtained by feeding the liquid crystal polyester composition without the carbon black into an injection molding machine and injection molding it under the conditions of: cylinder temperature 350°C, mold temperature 130°C and injection speed 75 mm/sec,
the difference of the relative permittivity values and the difference of the dielectric dissipation factor values being set as an increment of the relative permittivity and an increment of the dielectric dissipation factor, respectively,
the liquid crystal polyester composition wherein the increment of the relative permittivity is less than 0.18, preferably 0.17 or less, more preferably 0.16 or less, and further more preferably 0.15 or less,
and the increment of the dielectric dissipation factor is 0.0008 or less, preferably 0.0006 or less, more preferably 0.0005 or less, and further more preferably 0.0003 or less.

### · Measurement conditions

Measurement method: Capacitance method (Instrument:
Impedance analyzer (Model: E4991A by Agilent Technologies, Inc.))
Electrode model: 16453A
Measurement environment: 23°C, 50% RH
Applied voltage: 1 V

<11> The liquid crystal polyester composition according to <1> to <6>, <8> or <9>, wherein the content of the liquid crystal polyester in the liquid crystal polyester composition is preferably 40 parts by mass or more and 80 parts by mass or less, more preferably 45 parts by mass or more and 75 parts by mass or less, and further more preferably 50 parts by mass or more and 70 parts by mass or less based on 100 parts by mass of the total liquid crystal polyester composition.

### (Molded object)

One embodiment of the molded object is a molded object comprising the liquid crystal polyester composition of the embodiments described above.

One embodiment of the molded object is a molded object prepared using the liquid crystal polyester composition of the embodiment described above.

One embodiment of the molded object may be a molded object consisting of the liquid crystal polyester composition of the embodiment described above.

The molded object of the embodiment can be obtained, for example, by using pellets of the liquid crystal polyester composition as molding material in accordance with a known molding method.

As a method of molding here, a melt molding method is preferable, examples of which include an injection molding method, an extrusion molding method such as a T-die method or an inflation molding method, a compression molding method, a blow molding method, a vacuum molding method, and a press molding method, and the injection molding method is preferable among them.

The pellets of the liquid crystal polyester composition can be produced by feeding the liquid crystal polyester composition from a feeder using a twin-screw extruder (e.g., "PCM-30" by Ikegai Corp), melting and kneading with a screw, and cutting ejected strands.

For example, when performing molding by the injection molding method using the pellets of the liquid crystal polyester composition described above as the molding material, the molding is achieved by melting the pellets of the liquid crystal polyester composition using a known injection molding machine and injecting the melted pellets of the liquid crystal polyester composition into a mold.

Examples of the known injection molding machine include, for example, TR450EH3 by Sodick Co. Ltd. and a hydraulic horizontal molding machine PS40E5ASE made by

### NISSEI PLASTIC INDUSTRIAL CO., LTD.

The temperature conditions for the injection molding are determined properly according to the type of the liquid crystal polyester, and it is preferable to set the cylinder temperature of the injection molding machine at 10 to 80°C higher than the flow start temperature of the liquid crystal polyester used.

It is preferable to set the mold temperature in the range from room temperature (25°C) to 180°C from the standpoint of cooling speed and productivity.

Other injection conditions such as the screw rotation speed, the back pressure, the injection speed, the pressure holding, and the pressure holding time can be adjusted as appropriate.

In general, the molded object of the embodiment is applicable to any application to which liquid crystal polyester can be applied. According to the properties of the low relative permittivity, the low dielectric dissipation factor, and the excellent molding stability, the molded object of the embodiment is particularly suitable for the applications of high performance and high reliability electronic components adaptable to the high frequency range, and can be used, for example, as a high-speed transmission connector and a high-speed transmission antenna.

In addition to the applications described above, the molded object of the embodiment can be applied to applications such as sensors, LED lamps, connectors, sockets, resistors, relay cases, switches, coil bobbins, capacitors, Varicon cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer-related parts, microwave oven parts, audio and voice equipment parts, lighting parts, air conditioner parts, office computer-related parts, telephone and fax-related parts, and copier-related parts.

Since the molded object of the embodiment described above is a molded object prepared from the liquid crystal polyester composition of the embodiment described above, it is colored black and has both a lower increment of the relative permittivity and a lower increment of the dielectric dissipation factor than the state in which it is not colored black and can exhibit the intended dielectric properties.

### Examples

The present invention will be described in more detail with reference to Examples, but the present invention is not limited to these Examples.

### [Measurement of flow starting temperature of liquid crystal polyester]

In the Example, the flow starting temperature of the liquid crystal polyester was measured as follows.

Using a flow tester ("Model CFT-500EX", by Shimadzu Corporation), about 2 g of the liquid crystal polyester was filled into a cylinder fitted with a die having a nozzle with an inner diameter of 1 mm and a length of 10 mm. Next, the liquid crystal polyester was melted under a load of 9.8 MPa while increasing temperature at a rate of 4°C/min, extruded through a nozzle, and the temperature at which it exhibited a viscosity of 4800 Pa·s was measured, and was determined as the flow starting temperature of the liquid crystal polyester.

### [Measurement of volume average particle diameter of talc]

In the Example, the volume average particle diameter of talc was measured as follows.

Using a laser diffraction/scattering particle size distribution analyzer (LA-950V2 by HORIBA, Ltd.) as the measurement device, the volume average particle diameter was calculated by the laser diffraction/scattering method under the following measurement conditions while the talc was dispersed in water.

### (Measurement conditions)

Particle refractive index: 1.57 - 0.1i
Dispersing medium: water
Dispersing medium refractive index: 1.33

### <Liquid crystal polyester>

The liquid crystal polyester was prepared by producing a liquid crystal polyester (1) and a liquid crystal polyester (2) respectively.

### [Example of production 1: Production of liquid crystal polyester (1)]

In a reactor equipped with a stirring device, a torque meter, a nitrogen gas inlet tube, a thermometer and a reflux condenser, 994.5 g (7.2 mol) of p-hydroxybenzoic acid, 446.9 g (2.4 mol) of 4,4'-dihydroxybiphenyl, 239.2 g (1.44 mol) of terephthalic acid, 159.5 g (0.96 mol) of isophthalic acid, and 1347.6 g (13.2 mol) of acetic anhydride were placed. After replacing gas in the reactor with nitrogen gas, 0.2 g of 1-methylimidazole was added. Then while stirring was performed under a nitrogen gas flow, the temperature was raised from room temperature to 150°C over 30 minutes, and reflux was performed for 30 minutes at 150°C.

Next, 0.9 g of 1-methylimidazole was added, and the temperature was increased from 150°C to 320°C over 2 hours and 50 minutes while acetic acid by-product and unreacted acetic anhydride were distilled away. When an increase in torque was observed, the contents were removed from the reactor and cooled to room temperature to obtain a prepolymer as a solid body.

After the obtained solid body was pulverized to a particle diameter of 0.1 to 1 mm in a pulverizer, solid phase polymerization was performed by under a nitrogen atmosphere raising the temperature from room temperature to 220°C over 1 hour, raising the temperature from 220°C to 240°C over 30 minutes, and holding at 240°C for 10 hours.

The resulting solid phase polymer was cooled to room temperature to obtain a liquid crystal polyester (1) in powder form. The obtained liquid crystal polyester (1) had a flow starting temperature of 286°C.

### [Example of production 2: Production of liquid crystal polyester (2)]

In a reactor equipped with a stirring device, a torque meter, a nitrogen gas inlet tube, a thermometer and a reflux condenser, 994.5 g (7.2 mol) of p-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid, and 1347.6 g (13.2 mol) of acetic anhydride were placed. As a catalyst, 0.2 g of 1-methylimidazole was added, and gas in the reactor was adequately replaced with nitrogen gas. Then while stirring was performed under a nitrogen gas flow, the temperature was raised from room temperature to 150°C over 30 minutes, and reflux was performed for 30 minutes while the same temperature was maintained.

Next, 0.9 g of 1-methylimidazole was added, and the temperature was increased from 150°C to 320°C over 2 hours and 50 minutes while acetic acid by-product and unreacted acetic anhydride were distilled away. After holding at 320°C for 30 minutes, the contents were removed and cooled to room temperature.

After the obtained solid body was pulverized to a particle diameter of 0.1 to 1 mm in a pulverizer, solid phase polymerization was performed by under a nitrogen atmosphere raising the temperature from room temperature to 250°C over 1 hour, raising the temperature from 250°C to 285°C over 5 hours, and holding at 285°C for 3 hours.

The resulting solid phase polymer was cooled to room temperature to obtain a liquid crystal polyester (2) in powder form. The obtained liquid crystal polyester (2) had a flow starting temperature of 327°C.

### <Carbon black>

CB (1): NEROX 1000 manufactured by Orion Engineered Carbons S.A., average particle diameter of primary particles 50 nm, BET specific surface area 36 m²/g, DBP oil absorption 101 mL/100 g
CB (2): MA220, manufactured by Mitsubishi Chemical Corporation, average particle diameter of primary particles 55 nm, BET specific surface area 36 m²/g, DBP oil absorption 93 mL/100 g
CB (3): #Asahi 55G, manufactured by Asahi Carbon Co., Ltd., average particle diameter of primary particles 66 nm, BET specific surface area 25 m²/g, DBP oil absorption 87 mL/100 g
CB (4): VULCAN XTP50, manufactured by Cabot Specialty Chemicals, Inc. G.K., average particle diameter of primary particles 50 nm; BET specific surface area 55 m²/g; DBP oil absorption 139 mL/100 g
CB (5): PC100H manufactured by Black Diamond Material Science Co. Ltd., average particle diameter of primary particles 60 nm, BET specific surface area 40 m²/g, DBP oil absorption 72 mL/100 g
CB (6): SPHERON SO-LP, manufactured by Cabot Specialty Chemicals, Inc. G.K., average particle diameter of primary particles 70 nm; BET specific surface area 40 m²/g; DBP oil absorption 121 mL/100 g
CB (7): LAMP BLACK 101, manufactured by Orion Engineered Carbons S.A., average particle diameter of primary particles 95 nm, BET specific surface area 29 m²/g, DBP oil absorption 140 mL/100 g
CB (8): #960B, manufactured by Mitsubishi Chemical Corporation, average particle diameter of primary particles 16 nm, BET specific surface area 260 m²/g, DBP oil absorption 64 mL/100 g
CB (9): #45LB, manufactured by Mitsubishi Chemical Corporation, average particle diameter of primary particles 24 nm, BET specific surface area 120 m²/g, DBP oil absorption 53 mL/100 g

### <Filler>

Glass fiber (1): EFH50-01S, manufactured by Central Glass Co., LTD., number average fiber length 70 µm, fiber diameter 10 µm
plate inorganic filler (1): X-50, manufactured by NIPPON TALC Co., Ltd., volume average particle diameter 16.9 µm

### <Mold release agent>

Mold release agent (1): LOXIOL VPG-2571 (dipentaerythritol hexastearate) manufactured by Emery Oleochemicals Japan Ltd.

### <Production of liquid crystal polyester composition>

### (Examples 1 to 3, Comparative Examples 1 to 6)

Liquid crystal polyesters, fillers, a mold release agent, and carbon blacks shown in Table 1 were dry blended in parts by mass shown in Table 1.

Then, it was melted and kneaded in a twin-screw extruder ("PCM-30" by Ikegai Corp) at a screw rotation speed of 150 rpm, discharged as strands through a circular nozzle (discharge port) of 3 mm in diameter, dipped in a water bath of 30°C for 1.5 seconds, and then taken off at a take-off speed of 40 m/min. After passing through a roller, the liquid crystal polyester composition in each Example was obtained in pellet form by pelletizing with a strand cutter (TANABE PLASTICS MACHINERY CO., LTD.) with a rotary blade adjusted to 60 m/min.

### <Evaluation>

The dielectric properties of the liquid crystal polyester composition of each Example were evaluated by determining the increment of the relative permittivity and the increment of the dielectric dissipation factor.

### [Measurement of increment of relative permittivity and increment of dielectric dissipation factor]

The liquid crystal polyester composition of each Example was placed in an injection molding machine ("PNX40-5A" by NISSEI PLASTIC INDUSTRIAL CO., LTD.), injection-molded at a cylinder temperature of 350°C, a mold temperature of 130°C, and an injection speed of 75 mm/sec, and 10 test pieces of 64 mm x 64 mm x 1.0 mm t were obtained.

The relative permittivity and the dielectric dissipation factor at 1 GHz were measured for the resulting 10 test pieces under the following measurement conditions, and the average value was determined as the dielectric property value of the test piece.

### · Measurement conditions

Measurement method: Capacitance method (Instrument:
Impedance analyzer (Model: E4991A by Agilent Technologies, Inc.))
Electrode model: 16453A
Measurement environment: 23°C, 50% RH
Applied voltage: 1 V

In Examples 1 to 3 and Comparative Examples 1 to 6, a composition comprising the same amount of the liquid crystal polyester, the filler, and the mold release agent but without the carbon black, was injection-molded at a cylinder temperature of 350°C, a mold temperature of 130°C, and an injection speed of 75 mm/sec, and 10 control test pieces of 64 mm x 64 mm x 1.0 mm t were obtained.

The dielectric properties of the resulting 10 control test pieces were measured under the same measurement conditions as above, and the average value was determined as the dielectric property value of the control test piece.

The difference in the relative permittivity between the test piece and the control test piece, or "relative permittivity of test piece - relative permittivity of control test piece", was calculated as the increment of the relative permittivity. The difference in the dielectric dissipation factor between the test piece and the control test piece, or "dielectric dissipation factor of test piece - dielectric dissipation factor of control test piece", was calculated as the increment of the dielectric dissipation factor. These results are shown in Table 1.

**[Table 1]**

| | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Liquid crystal polyester | Liquid crystal polyester (1) | 27 | 27 | 27 | 27 | 27 | 27 | 27 | 27 | 27 |
| | Liquid crystal polyester (2) | 33 | 33 | 33 | 33 | 33 | 33 | 33 | 33 | 33 |
| Carbon black | CB (1) | 1 | | | | | | | | |
| | CB (2) | | 1 | | | | | | | |
| | CB (3) | | | 1 | | | | | | |
| | CB (4) | | | | 1 | | | | | |
| | CB (5) | | | | | 1 | | | | |
| | CB (6) | | | | | | 1 | | | |
| | CB (7) | | | | | | | 1 | | |
| | CB (8) | | | | | | | | 1 | |
| | CB (9) | | | | | | | | | 1 |
| Filler | Glass fiber (1) | 10 | 10 | 10 | 10 | 10 | 10 | 10 | 10 | 10 |
| | Plate inorganic filler (1) | 30 | 30 | 30 | 30 | 30 | 30 | 30 | 30 | 30 |
| Mold release agent | Mold release agent (1) | 0.1 | 0.1 | 0.1 | 0.1 | 0.1 | 0.1 | 0.1 | 0.1 | 0.1 |
| Property of carbon black | Diameter of primary particles (nm) | 50 | 55 | 66 | 50 | 60 | 70 | 95 | 16 | 24 |
| | Specific surface area (m²/g) | 36 | 36 | 25 | 55 | 40 | 40 | 29 | 260 | 120 |
| | DBP oil absorption (mL/100 g) | 101 | 93 | 87 | 139 | 72 | 121 | 140 | 64 | 53 |
| Dielectric property | Increment of relative permittivity | 0.16 | 0.14 | 0.13 | 0.20 | 0.16 | 0.18 | 0.18 | 0.21 | 0.22 |
| | Increment of dielectric dissipation factor | 0.0004 | 0.0003 | 0.0002 | 0.0009 | 0.0010 | 0.0004 | 0.0001 | 0.0029 | 0.0025 |

From the results shown in Table 1, by comparing Examples and Comparative Examples, it was confirmed that the test pieces prepared using the liquid crystal polyester composition of Examples 1 to 3, to which the present invention is applied, are colored black and that both the increment of the relative permittivity and the increment of the dielectric dissipation factor are kept at a low level.

Each configuration of each embodiment, a combination thereof, and the like are examples, and addition, omission, substitution of a configuration, and other modifications of a configuration are possible to the extent that they do not deviate from the object of the present invention. In addition, the present invention is not limited to each embodiment, but is limited only to the scope of the claims.

## Claims

1. A liquid crystal polyester composition comprising a liquid crystal polyester and a carbon black, wherein primary particles of the carbon black have an average particle diameter of 50 nm or more and less than 70 nm, and the carbon black has a BET specific surface area of less than 40 m²/g.

2. The liquid crystal polyester composition according to claim 1, wherein the carbon black has a DBP oil absorption of 80 mL/100 g or more and 120 mL/100 g or less.

3. The liquid crystal polyester composition according to claim 1 or 2, wherein primary particles of the carbon black have an average particle diameter of 55 nm or more and less than 70 nm.

4. The liquid crystal polyester composition according to claim 1 or 2, wherein a content of the carbon black is 0.015 parts by mass or more and 15 parts by mass or less based on 100 parts by mass of a content of the liquid crystal polyester.

5. The liquid crystal polyester composition according to claim 1 or 2, further comprising a filler, wherein a content of the filler is 1 part by mass or more and 200 parts by mass or less based on 100 parts by mass of the content of the liquid crystal polyester.

6. The liquid crystal polyester composition according to claim 5, wherein the filler is at least one kind of inorganic filler selected from the group consisting of a fibrous filler, a hollow filler, and a plate filler.

7. A molded object comprising the liquid crystal polyester composition according to claim 1 or 2.
